(19) Europäisches Patentamt
European Patent Office
Office européen des brevets

(11) **EP 1 564 395 B1**

(12) **EUROPEAN PATENT SPECIFICATION**

(45) Date of publication and mention
of the grant of the patent:
**19.12.2007 Bulletin 2007/51**

(51) Int Cl.:
*F02D 41/40* *(2006.01)*

(21) Application number: **05003469.3**

(22) Date of filing: **17.02.2005**

(54) **Fuel injection control apparatus and fuel injection control method for diesel engine**

Vorrichtung und Verfahren zur Steuerung der Einspritzung eines Dieselmotors

Dispositif et méthode de commande de l'injection de carburant pour un moteur diesel

(84) Designated Contracting States:
**DE FR GB**

(30) Priority: **17.02.2004 JP 2004039824**

(43) Date of publication of application:
**17.08.2005 Bulletin 2005/33**

(73) Proprietor: **Toyota Jidosha Kabushiki Kaisha
Toyota-shi, Aichi-ken, 471-8571 (JP)**

(72) Inventors:
• **Negishi, Akiyoshi
1, Toyota-cho, Toyota-shi,
Aichi-ken, 471-8571 (JP)**
• **Kibe, Kazuya
1, Toyota-cho, Toyota-shi,
Aichi-ken, 471-8571 (JP)**

(74) Representative: **Kuhnen & Wacker
Patent- und Rechtsanwaltsbüro
Prinz-Ludwig-Strasse 40A
85354 Freising (DE)**

(56) References cited:
**EP-A2- 0 937 878          EP-A2- 1 369 572
JP-A- 7 034 927            JP-A- 2001 115 885**

**Description**

BACKGROUND OF THE INVENTION

1. Field of the Invention

The invention relates to a fuel injection control apparatus and fuel injection control method for a diesel engine.

2. Description of the Related Art

In a diesel engine, fuel injection control for adjusting fuel injection timing and a fuel injection amount is performed based on an operational state such as an engine rotational speed, an accelerator pedal operation amount, a coolant temperature, and an intake air temperature.

Combustion performed in the diesel engine includes pre-mixed combustion and diffusive combustion. When fuel injection is started, initially, a combustible gas mixture is generated due to vaporization and diffusion of the fuel (ignition delay period). Next, self ignition of the combustible gas mixture occurs at several portions in a combustion chamber substantially simultaneously, and combustion proceeds rapidly (pre-mixed combustion). Further, fuel injection into the combustion chamber is continued, and the combustion is performed continuously (diffusive combustion). Then, heat generation is continued for a while, since unburned fuel remains even after the fuel injection ends (after-burning period).

Also, in the diesel engine, as the ignition delay period becomes longer or as vaporization of the fuel during the ignition delay period becomes more vigorous, a frame propagation speed after ignition is increased. When the flame propagation speed is increased, an amount of fuel burned during a given period becomes excessive, a pressure in a cylinder abruptly increased, and vibration and noise are generated. Such a phenomenon is called diesel knocking, and is likely to occur while the engine is operated at a low load.

In order to prevent such diesel knocking, various fuel injection control apparatuses have been developed. For example, a fuel injection control apparatus is proposed which performs pilot injection for injecting a small amount of fuel in advance, temporarily stops the fuel injection, and then performs main injection when the fuel is ignited (becomes a so-called pilot flame).

Performing such pilot injection makes it possible to moderate the initial combustion performed in the diesel engine, and suppress generation of diesel knocking. It is also possible to prevent occurrence of misfire, since the fuel injected by the pilot injection has already been ignited and a pilot flame has already been obtained when the main injection is performed. Accordingly, performing the pilot injection increases cold startability and reduces generation of white smoke when a temperature is low. In addition, the scale of the pre-mixed combustion is reduced, since the fuel injection amount during the ignition delay period is reduced due to the pilot injection. Generally, while the pre-mixed combustion is performed, the heat release rate is increased, and therefore generation of nitrogen oxides (hereinafter, referred to as "NOx") is promoted. However, the scale of pre-mixed combustion is reduced by performing the pilot injection. Accordingly, generation of NOx, and generation of noise due to the pre-mixed combustion are reduced.

However, in order to perform the pilot injection using a small amount of fuel, the fuel injection amount needs to be controlled meticulously, which makes it considerably difficult to perform the pilot injection stably in a wide operating range. Therefore, in such a fuel injection apparatus, generally, the injection mode is changed between a main injection mode and a pilot injection mode based on an engine operational state such as an engine rotational speed and a load due to an accelerator pedal operation amount (e.g., a fuel injection amount). Namely, in this case, the pilot injection is performed in an operating range in which an engine rotational speed is low and a fuel injection amount is small.

Meanwhile, it is known that, in such pilot injection, the conditions such as a required fuel injection amount vary depending on temperature conditions such as an engine temperature and an intake air temperature.

When the temperature is low, ignitionability of the fuel is low, and the combustion speed becomes slow. Accordingly, even if the pilot injection is performed when the temperature is low, the fuel may not be ignited, or even if the fuel is ignited, the flame may be extinguished soon. In order to solve these problems, the pilot injection amount needs to be set to a large value. However, if the pilot injection amount is uniformly increased, when the temperature is high, the fuel injected by the pilot injection is abruptly burned, and diesel knocking occurs.

Accordingly, for example, Japanese Patent Application Publication No. JP-A-2001-115885 discloses an apparatus including pilot injection control means for controlling pilot injection timing and a pilot injection amount based on an engine coolant temperature. In this apparatus, as the temperature becomes lower, the pilot injection timing is set to be more advanced by a table for converting the read coolant temperature into the pilot injection timing. Also, as the temperature becomes lower, the pilot injection amount is set to be increased by a table for converting the read coolant temperature into the pilot injection amount. In this apparatus, the pilot injection timing and the pilot injection amount are set based on the engine coolant temperature. It is therefore possible to control a combustion state based on a change in a wall temperature of the combustion chamber, and suppress occurrence of a misfire, generation of white smoke and occurrence of diesel knocking due to excessively advanced injection timing.

Setting the pilot injection timing and the pilot injection amount based on the engine coolant temperature makes it possible to suppress occurrence of a misfire, generation of white smoke and generation of diesel knocking. However, usually, a bore wall temperature, which is a temperature of a cylinder bore wall on the combustion chamber side, becomes higher than the coolant temperature by a larger amount as the engine load becomes higher. Therefore, the optimum values of various fuel injection parameters are adjusted in a state where there is such a temperature difference.

Accordingly, for example, when the engine load is suddenly changed from a low load to a high load, the actual temperature of the cylinder bore wall cannot be sufficiently increased during a certain period after the engine load is changed, which causes deviation in the fuel injection parameters. Namely, transient delay occurs in the bore wall temperature, and the ignition delay period becomes longer due to such transient delay of the cylinder bore wall temperature. Accordingly, it becomes difficult to obtain the optimum combustion state. The state described so far is the same in the case where the engine load is suddenly changed from a high load to a low load.

## SUMMARY OF THE INVENTION

The invention is made in light of the above-mentioned circumstances. It is therefore an object of the invention to provide a fuel injection control apparatus and fuel injection control method for a diesel engine, which can maintain an appropriate combustion state even if transient delay occurs in a bore wall temperature. Hereafter, means for achieving the object and effects thereof will be described in detail.

According to a first aspect of the invention, there is provided a fuel injection control apparatus for a diesel engine, which controls a fuel injection mode based on a fuel injection parameter whose optimum value is adjusted based on a temperature difference between a bore wall temperature, which is a temperature of a cylinder bore wall on a combustion chamber side, and a coolant temperature, which is a temperature of a coolant that cools the cylinder bore wall. The fuel injection control apparatus includes estimating means for estimating a difference between a difference between a bore wall temperature and a coolant temperature during a transition operation time and a difference between a bore wall temperature and a coolant temperature during a steady operation time, the difference being caused due to a sudden change in a load of the diesel engine; and correcting means for correcting the fuel injection parameter based on the estimated difference.

According to the first aspect, even when the engine load is suddenly changed, the difference due to the sudden change in the load is estimated, and the fuel injection parameter is corrected based on the estimated difference. Accordingly, even when the optimum value of the fuel injection parameter is adjusted in advance under the above-mentioned condition, deviation in the parameter due to such transient delay of the bore wall temperature is corrected, and the combustion state is maintained appropriately.

In the first aspect, the correcting means may include steady operation time bore wall temperature computing means for obtaining the bore wall temperature at steady operation time based on a relationship between a rotational speed of the diesel engine and a fuel injection amount; transition operation time bore wall temperature estimating means for estimating a bore wall temperature with transient delay of the bore wall temperature taken into consideration, by using a time constant concerning the transient delay of the bore wall temperature that is decided based on the relationship between the rotational speed of the diesel engine and the fuel injection amount; and difference computing means for computing the difference based on a temperature difference between the estimated bore wall temperature with transient delay taken into consideration and the bore wall temperature at steady operation time. The correcting means may be able to correct the fuel injection parameter using the computed difference. Thus, the bore wall temperature at steady operation time is obtained based on the relationship between the rotational speed of the diesel engine and the fuel injection amount, and the bore wall temperature with transient delay of the bore wall temperature taken into consideration is estimated by using the time constant concerning the transient delay of the bore wall temperature that is decided based on the relationship between the rotational speed of the diesel engine and the fuel injection amount. Then, the difference is computed based on a difference between a bore wall temperature and a coolant temperature during a transition operation time and a difference between a bore wall temperature and a coolant temperature during a steady operation time. It is thus possible to accurately obtain the amount of transient delay of the bore wall temperature, which occurs due to a sudden change in the engine load, based on the engine operational state when the sudden change occurs. Consequently, it is possible to correct the fuel injection parameter further accurately.

In the first aspect, the steady operation time bore wall temperature computing means may compute a steady operation time temperature difference, that is, a temperature difference between the bore wall temperature and the coolant temperature at steady operation time, as an index value of the bore wall temperature at steady operation time. The transition operation time bore wall temperature estimating means may estimate a transition operation time temperature difference, that is, a temperature difference between the bore wall temperature with transient delay taken into consideration and the coolant temperature, as an index value of the bore wall temperature with transient delay taken into consideration. Maps showing the steady operation time temperature difference and the time constant concerning the transient delay of the bore wall temperature, which is decided by the transition operation time bore wall temperature estimating means, may be prepared based on the relationship between the rotational speed of the diesel engine and the fuel injection amount. In the case where the transition operation time bore wall temperature estimating means periodically estimates the transition operation time temperature difference, when Thbdc indicates the steady operation time temperature difference obtained by the steady operation time bore wall temperature computing means each time computation is performed, thbdtn-1 indicates the previous estimate value of the transition operation time temperature difference, and Thbdtn indicates the present estimate value of the transition operation time temperature difference, the transition operation time bore wall temperature estimating means may compute and estimate the present estimate value by performing the equation "Thbdtn = Thbdtn-1+(Thbdc-Thbdtn-1)/time constant" based on the time constant decided according to the map each time the computation is performed. According to the first aspect, the steady operation time temperature difference is obtained as the index value of the bore wall temperature at steady operation time, and the transition operation time temperature difference is estimated as the index value of the bore wall temperature with transient delay taken into consideration. It is therefore possible to obtain an index value of each bore wall temperature with the temperature of the coolant, which affects the combustion state, transition of the bore wall temperature, and the like, taken into consideration. Consequently, it is possible to appropriately estimate the difference.

Also, it becomes possible to easily obtain the steady operation time temperature difference and the time constant concerning the transient delay of the bore wall temperature according to the map.

Also, estimation of the transition operation time temperature difference is periodically performed by the transition operation time bore wall temperature estimating means according to the equation based on the value read from the map. It is therefore possible to appropriately maintain the accuracy and reliability of the estimation of the transition operation time temperature difference.

The fuel injection parameter whose optimum value is adjusted based on the temperature difference between the bore wall temperature and the coolant temperature may be shown in a map as a base injection parameter related to the rotational speed of the diesel engine and the fuel injection amount. The correcting means may obtain the corresponding base parameter according to the map, and correct the fuel injection parameter by adding the transition correction amount corresponding to the difference, which is calculated based on the injection parameter, to the obtained base injection parameter. It is thus possible to easily obtain the fuel injection parameter whose optimum value is adjusted based on the temperature difference between the bore wall temperature and the coolant temperature, based on the rotational speed of the diesel engine and the fuel injection amount at each time. Also, it is possible to considerably easily make the above-mentioned correction to the obtained parameter.

In the first aspect, the fuel injection parameter to be corrected by the correcting means may be at least one of a pilot interval at the time of pilot injection, a pilot injection amount at the time of pilot injection, fuel injection timing at the time of main injection, a fuel injection amount at the time of main injection, and a fuel injection pressure of the injector. Each of the pilot interval at the time of pilot injection, the pilot injection amount at the time of pilot injection, the fuel injection timing at the time of main injection, the fuel injection amount at the time of main injection, and the fuel injection pressure of the injector is a parameter effective for preventing deterioration of the fuel state due to the transient delay of the bore wall temperature. With the above-mentioned configuration in which at least one of these parameters is the target of the correction performed by the correcting means, the combustion state can be maintained further appropriately.

According to a second aspect of the invention, there is provided a fuel injection control method for a diesel engine, which controls a fuel injection mode based on a fuel injection parameter whose optimum value is adjusted based on a temperature difference between a bore wall temperature, which is a temperature of a cylinder bore wall on a combustion chamber side, and a coolant temperature, which is a temperature of a coolant for cooling the cylinder bore wall. The fuel injection control method includes a step of estimating a difference between a difference between a bore wall temperature and a coolant temperature during a transition operation time and a difference between a bore wall temperature and a coolant temperature during a steady operation time, the difference being caused due to a sudden change in a load of the diesel engine; and a step of correcting the fuel injection parameter based on the estimated difference.

BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:

FIG. 1 is a view schematically showing an entire structure of a fuel injection control apparatus for a diesel engine according to an embodiment of the invention;
FIG. 2 is a flowchart showing a transition correction process performed based on a difference (Thbd) in the embodiment;

FIG. 3 is a map used to calculate a temperature difference between a bore wall temperature and a coolant temperature at steady operation time in the transition correction process performed based on the difference (Thbd) in the embodiment;

FIG. 4 is a map used to calculate a time constant of the transient delay of the bore wall temperature in the transition correction process performed based on the difference (Thbd) in the embodiment;

FIG. 5 is a map used to calculate each injection parameter correction amount in the transition correction process performed based on the difference (Thbd) in the embodiment; and

FIGS. 6A to 6E are time charts showing an example of the control mode of the transition correction process performed based on the difference (Thbd) in the embodiment.

DETAILED DESCRIPTION OF THE PREFERRED EMBODIMENTS

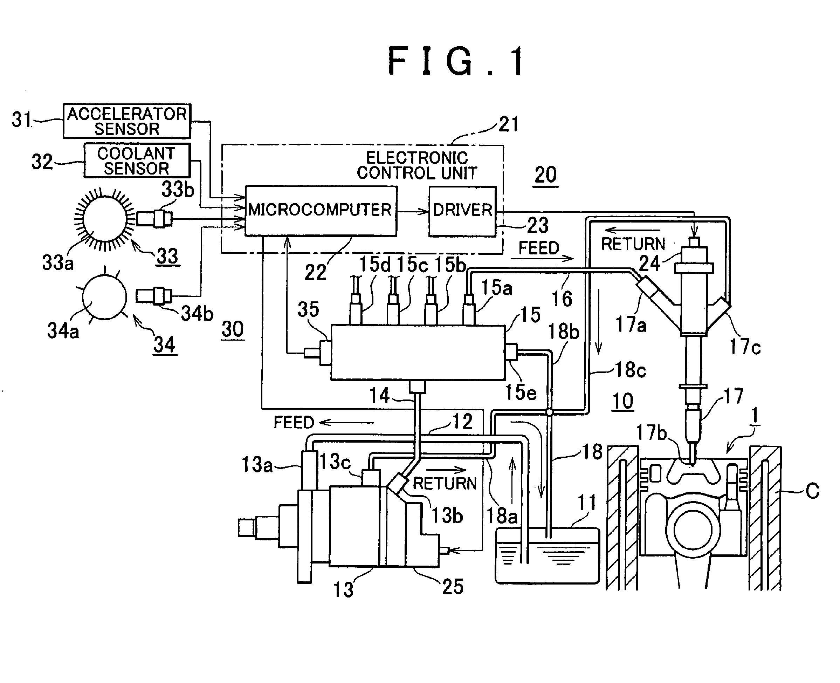

FIG. 1 shows a fuel injection control apparatus for a diesel engine according to an embodiment of the invention.

The fuel injection control apparatus for a diesel engine according to the embodiment is obtained by applying the invention to an apparatus that is provided in a diesel engine including a common rail serving as an accumulator pipe and that controls fuel injection from an injector to which fuel is delivered, under pressure, from the common rail.

First, a structure of the fuel injection control apparatus for a diesel engine according to the embodiment will be described with reference to FIG. 1.

As shown in FIG. 1, the fuel injection control apparatus according to the embodiment mainly includes a high pressure fuel injection system 10 which injects and supplies high pressure fuel to a diesel engine 1; a control system 20 which controls fuel pressure of the high pressure fuel injection system 10; a detection system 30 which outputs detection data obtained by various sensors to the control system as part of control data when the control system 20 performs control; and the like.

The high pressure fuel injection system 10 includes a supply pump 13 which is coupled with, for example, an output shaft of the diesel engine 1 so as to be driven, sucks the fuel stored in a fuel tank 11 through a supply pipe 12, and pressurizes and discharges the fuel as high pressure fuel. Then, the high pressure fuel discharged by the supply pump 13 is supplied to a common rail 15, which serves as an accumulator pipe, through a supply pipe 14 and stored in the common rail 15. The high pressure fuel stored in the common rail 15 is then supplied to an injector (fuel injection valve) 17 through a supply pipe 16, and injected and supplied to a corresponding cylinder of the diesel engine 1 from the injector 17 according to driving of an electromagnetic valve 24 included in the control system 20.

In the embodiment, description is made on the assumption that the diesel engine 1 is a four-cylinder engine. Injection of the fuel, which is supplied from the common rail 15, from the injector 17 is actually performed for each of the cylinders of the engine 1.

The supply pump 13 includes an intake port 13a which is connected to the supply pipe 12; a discharge port 13b which is connected to the supply pipe 14; and a return port 13c which is connected to a return pipe 18a. The amount of fuel discharged by the supply pump 13 is controlled by a pressure control valve 25 included in the control system 20. Then, the excessive fuel, which has not been discharged from the discharge port 13b, is returned to the fuel tank 11 through the return port 13c, and return pipes 18a and 18.

The common rail 15, which stores the high pressure fuel therein, includes four output ports 15a to 15d corresponding to the four cylinders of the diesel engine 1, respectively; and a pressure regulator 15e. The fuel, which is pressurized more than necessity for some reason, is returned to the fuel tank 11 through the pressure regulator 15e and return pipes 18b and 18.

Also, a supply port 17a is provided in a casing of the injector 17 which injects and supplies the fuel that is stored, under pressure, in the common rail 15 to the diesel engine 1 according to driving of the electromagnetic valve 24. The fuel which is stored, under pressure, in the common rail 15 is supplied to the inside of the injector 17 through the supply port 17a, and the high pressure fuel is injected and supplied to the corresponding cylinder of the diesel engine 1 through a nozzle hole 17b formed in a bottom portion of the injector 17. In the diesel engine 1, a cylinder bore is formed in a cylinder block C, and a piston reciprocates in the cylinder bore. A wall surface forming the cylinder bore is a so-called cylinder bore wall.

A return port 17c for releasing fuel is formed in the casing of the injector 17. The excessive fuel is returned from the return port 17c to the fuel tank 11 through return pipes 18c and 18.

In the fuel injection control apparatus shown in FIG. 1, the control system 20 mainly includes an electronic control unit 21; the electromagnetic valve 24 whose driving is controlled by the electronic control unit 21; and the pressure control valve 25.

The electronic control unit 21 performs various controls of the diesel engine 1 according to various control programs stored in program memory (not shown). The electronic control unit 21 includes a microcomputer 22 which performs various control processes; various control circuits connected to an output port of the microcomputer 22 (for example, a drive circuit which drives the supply pump 13 and a driver 23 which drives the electromagnetic valve 24); and the like. The electronic control unit 21 performs various controls such as the fuel injection control through controls by these drive circuits. In the fuel injection control, determination whether the pilot injection, which is performed prior to the main injection, can be performed is made, and control of various fuel injection parameters, and the like are performed. In the embodiment, various fuel injection parameters are set based on the engine operational state and the like. The various fuel injection parameters are a fuel pressure in the common rail 15, a fuel injection amount (pilot injection amount) and fuel injection timing at the time of pilot injection, a fuel injection amount and fuel injection timing at the time of main injection, and an interval between the pilot injection and the main injection, that is, a pilot interval, and the like.

In the fuel injection control apparatus according to the embodiment, the detection system 30 includes an accelerator sensor 31; a coolant temperature sensor 32; an engine rotational speed sensor 33; and a cylinder discriminating sensor 34; and a fuel pressure sensor 35.

The accelerator sensor 31 is provided near an accelerator pedal (not shown), and detects an operation amount (depression amount) of the accelerator pedal. The coolant temperature sensor 32 is provided in a water jacket of the diesel engine 1, and detects a coolant temperature. Detection signals from the accelerator sensor 31 and the coolant temperature sensor 32 are appropriately converted from an analog signal to a digital signal, and captured by the microcomputer 22 provided in the electronic control unit 21.

The engine rotational speed sensor 33 includes, for example, a rotor 33a which is attached to a crankshaft of the diesel engine 1; and an electromagnetic pickup 33b which is provided near the rotor 33a and which detects passage of protrusions formed on the outer periphery of the rotor 33a. The waveform of an output from the electromagnetic pickup 33b is usually shaped, and the output is captured by the microcomputer 22 as a pulse signal (NE pulse) corresponding to a rotational speed (rotational phase) of the crankshaft.

The cylinder discriminating sensor 34 includes, for example, a rotor 34a which is attached to a camshaft of the diesel engine 1; and an electromagnetic pickup 34b which is provided near the rotor 34a and which detects passage of protrusions formed, for discrimination of the cylinders of the engine 1, on the outer periphery of the rotor 34a. The wave form of an output from the electromagnetic pickup 34b is usually shaped, and the output is captured by the microcomputer 22 as an appropriate pulse signal whose wave form has been shaped.

The fuel pressure sensor 35 is provided, for example, in the common rail 15, and detects a fuel pressure of the high pressure fuel stored in the common rail 15. The detection signal from the fuel pressure sensor 35 is appropriately converted from an analog signal to a digital signal, and captured by the microcomputer 22 provided in the electronic control unit 21.

The fuel injection control apparatus according to the embodiment performs the pilot injection for injecting a small amount of fuel in advance, temporarily stops the fuel injection, and then performs the main injection when the fuel is ignited (become a pilot flame). Thus, engine vibration and noise generated due to fuel combustion are reduced, the engine startability at a low temperature is increased, and generation of white smoke is suppressed. The pilot injection is performed under predetermined conditions (for example, when the engine is operated at a low load, and when the engine is started at a low temperature).

The optimum value of the fuel injection parameter used for the fuel injection such as the pilot injection and the main injection varies depending on temperature conditions such as an engine temperature and an intake air temperature. Accordingly, for example, a control apparatus is proposed which sets the fuel injection parameter based on the coolant temperature that has a correlation with the engine temperature. However, a bore wall temperature, which is a temperature of the cylinder bore wall on the combustion chamber side, becomes higher than a coolant temperature by a larger amount as the engine load becomes higher. Therefore, in the embodiment, the optimum values of the various fuel injection parameters are adjusted in the state where there is such a temperature difference, that is, in the state where the wall temperature of the combustion chamber can be obtained more accurately. More particularly, the values of the various fuel injection parameters, which are set based on the engine load and the like, are optimized in advance based on the temperature difference between the temperature of the cylinder bore wall and the coolant temperature at steady operation time.

For example, when the engine load is suddenly changed from a low load to a high load, the actual temperature of the cylinder bore wall cannot be increased sufficiently during a certain period after the engine load is changed, and the actual temperature is different from the bore wall temperature at the time of steady operation performed at a high load. Therefore, deviation occurs in the injection parameters. Namely, transient delay of the bore wall temperature occurs, and the above-mentioned ignition delay period becomes longer due to such transient delay. As a result, the optimum combustion state cannot be obtained.

Accordingly, in the embodiment, various fuel injection parameters are set in consideration of such transient delay of the bore wall temperature, and the appropriate combustion state is thus maintained.

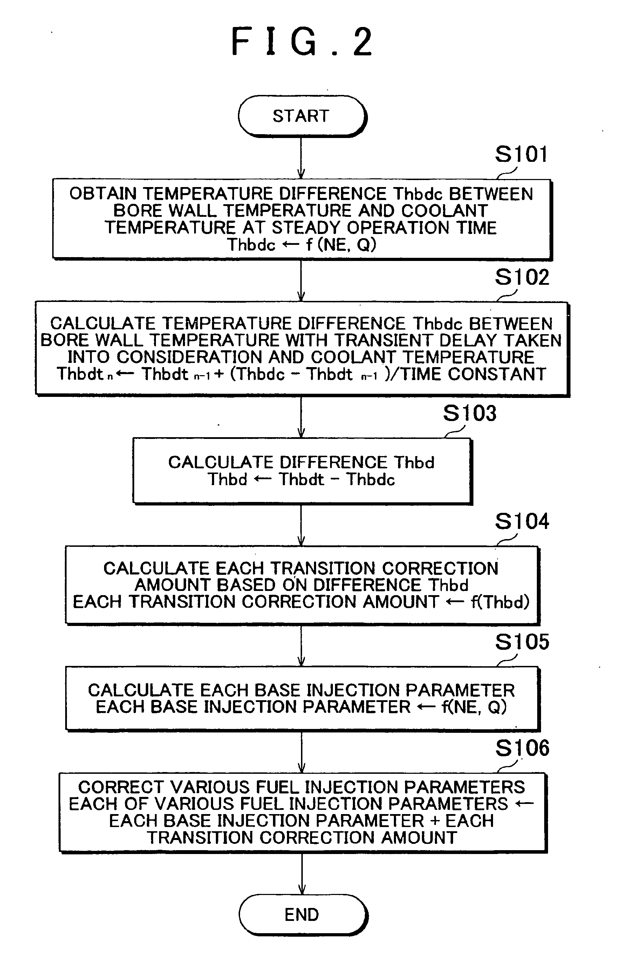

Hereinafter, the fuel injection control according to the embodiment will be described in detail with reference to FIGS. 2 to 6.

FIG. 2 shows a routine of a transition correction process which is realized by embodying the correcting means for correcting the deviation in the fuel injection parameters due to the above-mentioned transient delay. The process is performed by the electronic control unit 21, for example, at predetermined intervals.

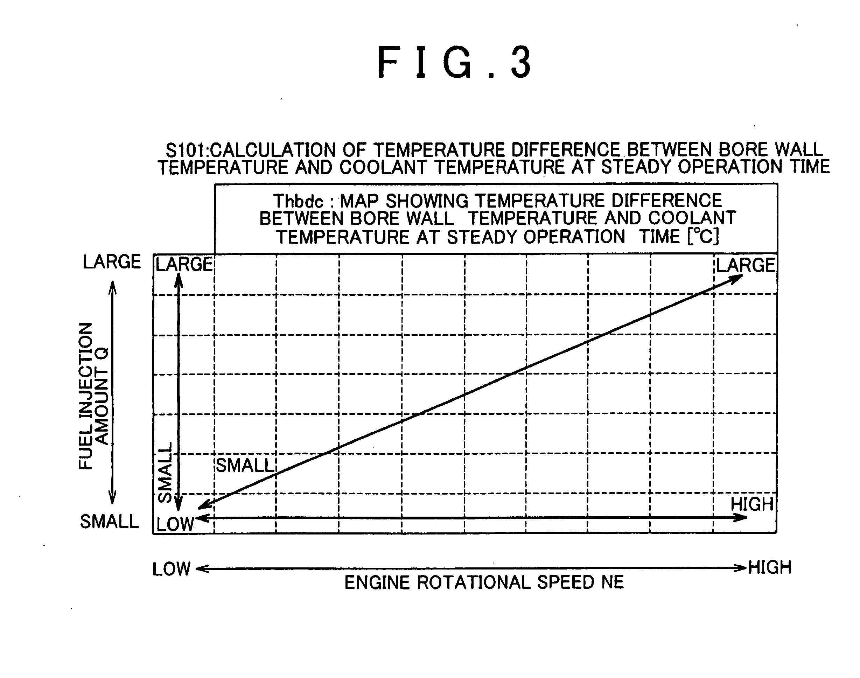

When the process is started, first, a steady operation time temperature difference Thbdc, which is a temperature difference between the bore wall temperature and a coolant temperature at steady operation time, is obtained based on a fuel injection amount Q and an engine rotational speed NE according to a temperature difference map shown in FIG. 3 (step S101). The fuel injection amount Q is calculated based on an engine load, which is obtained based on the engine rotational speed NE detected by the engine rotational speed sensor 33 and the accelerator pedal operation amount detected by the accelerator sensor 31, and the engine rotational speed NE. As shown in FIG. 3, the temperature difference map is set such that the value of the steady operation time temperature difference Thbdc increases as the engine rotational speed NE increases and as the fuel injection amount Q increases. The process of calculating the steady operation time temperature difference Thbdc constitutes the steady operation time bore wall temperature computing means.

A process different from the above-mentioned process may be employed for obtaining the steady operation time temperature difference Thbdc, if the steady operation time temperature difference Thbdc can be obtained appropriately.

Next, a transition operation time temperature difference Thbdt, which is the temperature difference between the bore wall temperature and the coolant temperature and which is the temperature difference with transient delay of the bore wall temperature taken into consideration, is periodically estimated according to the following equation (1) (step S 102).

$$\text{Thbdtn} \leftarrow \text{Thbdtn-1} + (\text{Thbdc} - \text{Thbdtn-1})/\text{time constant } \alpha)\ldots\text{Equation (1)}$$

Thbdtn signifies an estimate value of the transition operation time temperature difference Thbdt which is obtained by the present process.

Thbdtn-1 signifies an estimate value of the transition operation time temperature difference Thbdt which is obtained by the previous process.

Thbdc signifies the steady operation time temperature difference which is obtained in step S101 at each time.

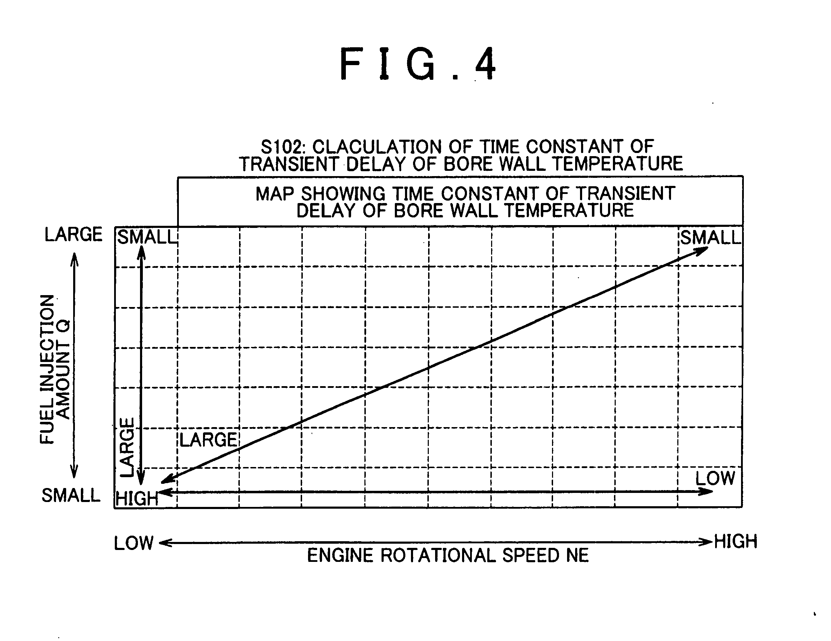

The time constant $\alpha$ is a value concerning the transient delay of the bore wall temperature, and is obtained based on the fuel injection amount Q and the engine rotational speed NE according to a time constant map shown in FIG. 4. As the fuel injection amount Q becomes smaller, the amount of heat generated when the fuel is burned becomes smaller. Therefore, the pace of increase in the bore wall temperature is reduced. Also, as the engine rotational speed NE becomes lower, the number of times fuel is injected during a predetermined period becomes smaller. Therefore, the pace of increase in the bore wall temperature per unit time is reduced. Accordingly, as shown in FIG. 4, the time constant map is set such that, as the engine rotational speed NE becomes lower and as the fuel injection amount Q becomes smaller, the value of the time constant $\alpha$, to be obtained, becomes larger, that is, an update amount, which is to be added to the transition operation time temperature difference Thbdtn-1 obtained in the previous process (Thbdc-Thbdtn-1/time constant $\alpha$), becomes smaller. The process of calculating the transition operation time temperature difference Thbdt constitutes the transition operation time bore wall temperature estimating means.

In the embodiment, the transition operation time temperature difference Thbdt is estimated according to the above-mentioned equation (1). However, another estimation method may be employed if the temperature difference with transient delay of the bore wall temperature taken into consideration can be obtained.

Next, a difference Thbd of the bore wall temperature, that is, a temperature difference between the bore wall temperature at the time of transition of the engine load and the bore wall temperature at the time of steady operation which is performed after the engine load is changed, is estimated according to the following equation (2) (step S103). The process of calculating the difference Thbd constitutes the difference (Thbd) computing means.

$$\text{Thbd} \leftarrow \text{transition operation time temperature difference Thbdt - steady operation}$$

$$\text{time temperature difference Thbdc}\ldots\text{Equation (2)}$$

As indicated by the equation (2), when the bore wall temperature at the time of transition is lower than the bore wall temperature at the time of steady operation which is performed after the engine load is changed, for example, when the engine operational state is changed from the low load operational state to the high load operational state, the difference Thbd becomes a negative value. On the other hand, when the bore wall temperature at the time of transition is higher than the bore wall temperature at the time of steady operation which is performed after the engine load is changed, for example, when the engine operational state is changed from the high load operational state to the low load operational state, the difference Thbd becomes a positive value.

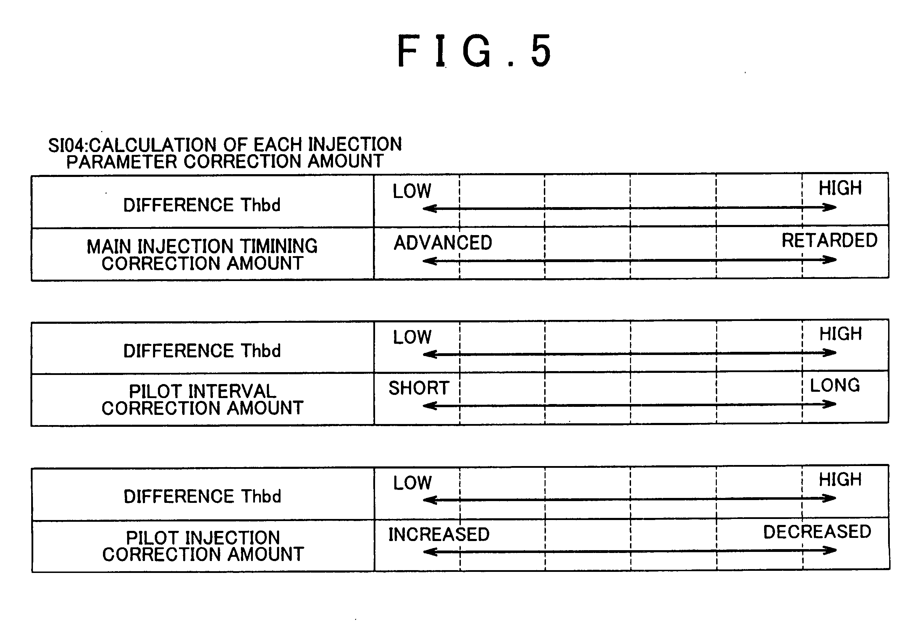

Next, a transition correction amount for each fuel injection parameter is calculated based on the calculated difference Thbd (step S104). A main injection timing correction amount MTH for correcting the injection timing of the main injection, a pilot interval correction amount PIH for correcting the pilot interval, and a pilot injection correction amount PQH for correcting the fuel injection amount at the time of pilot injection are obtained as the transition correction amounts according to the maps shown in FIG. 5, for example. These transition correction amounts are set in the following manner such that the appropriate combustion state can be maintained and therefore generation of noise due to combustion and the like can be suppressed. The correction shown in FIG. 5 is merely an example. The setting method may be changed as required, as long as the fuel injection parameter is corrected based on the bore wall temperature when the transient delay occurs, and therefore the appropriate combustion state can be maintained.

A description will be made concerning setting of the main injection timing correction amount MH.

The main injection timing correction amount MH is set such that, as the value of the difference Thbd becomes lower, the injection timing of the main injection is corrected so as to be more advanced. In this case, as the bore wall temperature at the time of transition becomes lower, by a larger amount, than the bore wall temperature at the time of steady operation which is performed after the engine load is changed, and as the ignition delay period of the fuel injected by the main injection becomes longer, the combustion is started earlier. Accordingly, at the same crank angle, the temperature in the combustion chamber in the case where the injection timing is corrected so as to be more advanced becomes higher than that in the case where the correction is not made. It is therefore possible to make the ignition delay period shorter. This correction makes it possible to maintain the appropriate combustion state, for example, to suppress generation of noise due to combustion, and the like.

Meanwhile, the main injection timing correction amount MH is set such that, as the value of the difference Thbd becomes higher, the injection timing of the main injection is corrected so as to be more advanced. In this case, as the bore wall temperature at the time of transition becomes higher, by a larger amount, than the bore wall temperature at the time of steady operation which is performed after the engine load is changed, and as the ignition delay period of the fuel injected by the main injection becomes excessively shorter, the combustion is started later. Accordingly, at the same crank angle, the temperature in the combustion chamber in the case where the injection timing is corrected so as to be retarded becomes lower than that in the case where the correction is not made. It is therefore possible to suppress excessive reduction of the ignition delay period. This correction makes it possible to suppress rapid combustion of the fuel, and to suppress generation of noise due to maintenance of the appropriate combustion state.

A description will be made concerning setting of the pilot interval correction amount PIH.

The pilot interval correction amount PIH is set such that, as the difference Thbd becomes lower, the pilot interval becomes shorter. In this case, as the bore wall temperature at the time of transition becomes lower, by a larger amount, than the bore wall temperature at the time of steady operation which is performed after the engine load is changed and as the ignition delay period of the fuel injected by the pilot injection becomes longer, the performance timing of the pilot injection comes closer to the performance timing of the main injection. Therefore, when a piston comes closer to the upper dead point, that is, when the cylinder pressure is high and temperature in the combustion chamber is high, the pilot injection is performed, and the fuel injected at this time can be ignited earlier. Accordingly, this correction makes it possible to maintain more appropriate combustion state, for example, to suppress generation of combustion noise due to ignition delay, and the like.

Meanwhile, the pilot interval correction amount PIH is set such that, as the value of the difference Thbd becomes higher, the pilot interval becomes longer. In this case, as the bore wall temperature at the time of transition becomes higher, by a larger amount, than the bore wall temperature at the time of steady operation which is performed after the engine load is changed, and as the fuel injected by the pilot injection is burned more rapidly, the performance timing of the pilot injection is more apart from the performance timing of the main injection. Accordingly, when the piston is apart from the upper dead point to some extent, that is, when the cylinder pressure is low and the temperature in the combustion chamber is not excessively high, the pilot injection is performed. As a result, rapid combustion of the fuel injected at this time can be suppressed. Therefore, this correction also makes it possible to maintain the appropriate combustion state, for example, to suppress combustion noise, and the like.

A description will be made concerning setting of the pilot injection correction amount PQH.

The pilot injection correction amount PQH is set such that, as the value of the difference Thbd becomes lower, the pilot injection amount is corrected so as to be increased by a larger amount. In this case, as the bore wall temperature at the time of transition becomes lower, by a larger amount, than the bore wall temperature at the time of steady operation which is performed after the engine load is changed, and the fuel injected by the pilot injection becomes harder to burn, the fuel injection amount is corrected so as to be increased by a larger amount. Accordingly, the fuel injected at this time can be reliably ignited. Therefore, this correction makes it possible to maintain more appropriate combustion state, for example, to suppress the combustion noise due to the ignition delay, and the like.

Meanwhile, the pilot injection correction amount PQH is set such that, as the difference Thbd becomes higher, the pilot injection amount is corrected so as to be decreased by a larger amount. In this case, as the bore wall temperature at the time of transition becomes higher, by a larger amount, than the bore wall temperature at the time of steady operation which is performed after the engine load is changed, and the fuel injected by the pilot injection is burned more rapidly, the injection amount is corrected to be decreased by a larger amount. Accordingly, the combustion speed (flame propagation speed) of the fuel injected at this time can be reliably reduced. Therefore, this correction also makes it possible to maintain the appropriate combustion state, for example, to suppress the combustion noise, and the like.

When these transition correction amounts are calculated, next, the base injection parameters are calculated based on the engine rotational speed NE and the fuel injection amount Q according to a map (step S105). The optimum values of the base injection parameters, to be calculated at this time, are adjusted in advance based on the temperature difference between the bore wall temperature and the coolant temperature at the steady operation time. In this case, each of the basic main injection timing MB which is the base injection parameter concerning the timing of the main injection, the basic pilot interval PIB which is the base injection parameter concerning the pilot interval, and the basic pilot injection amount PQB which is the base injection parameter concerning the fuel injection amount at the time of pilot injection is calculated.

Next, each of the fuel injection parameters is corrected by adding the above-mentioned transition correction amount to the base injection parameter (step S106). In this case, the main injection timing MT, the pilot interval PI and the pilot injection amount PQ, which correspond to the difference of the bore wall temperature, are calculated by correcting the base injection parameters according to the following equations (3) to (5), afterwhich the process ends.

$$\text{Main injection timing MT} \leftarrow \text{basic main injection timing MB} + \text{main injection timing correction amount MH} \ldots \text{Equation (3)}$$

$$\text{Pilot interval PI} \leftarrow \text{basic pilot interval PIB} + \text{pilot interval correction amount PIH} \ldots \text{Equation (4)}$$

$$\text{Pilot injection amount PQ} \leftarrow \text{basic pilot injection amount PQB} + \text{pilot injection correction amount PQH} \ldots (5)$$

Then, fuel injection from the injector 17 is controlled using the fuel injection parameters obtained through the above-mentioned process.

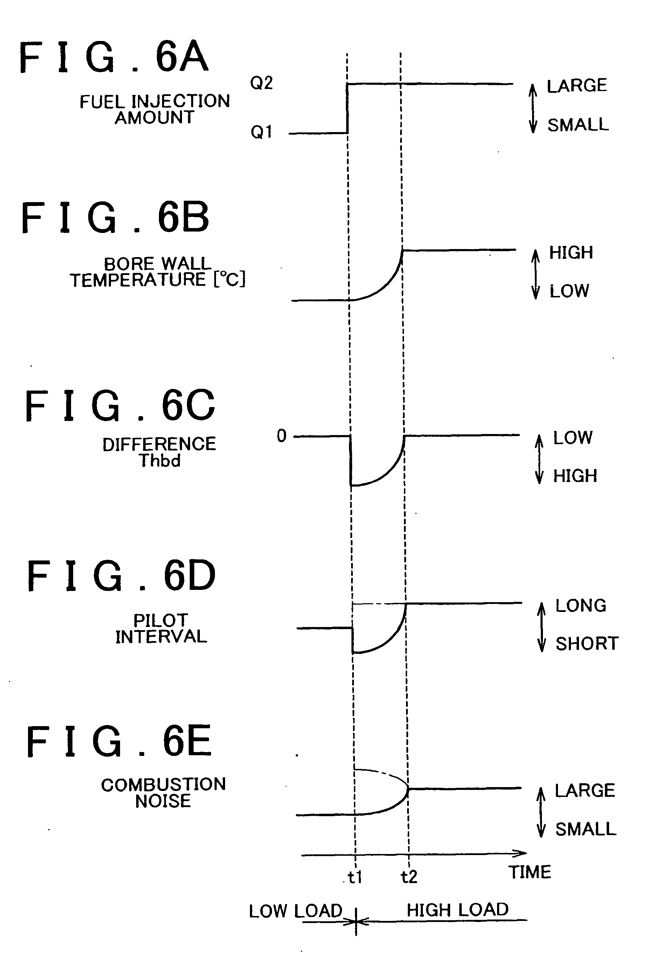

FIG. 6A- 6E shows an example of the transition correction performed by the fuel injection control apparatus according to the embodiment. FIG. 6A- 6E shows an example of the correction of the pilot interval PI and the like when the operational state of the diesel engine 1 is changed from the low load operational state to the high load operational state. In FIG. 6A- 6E, the state shown by a solid line shows the state according to the embodiment in which the transition correction process is performed, and the state shown by a chain line shows the state where the transition correction process is not performed.

If the operational state of the diesel engine 1 is changed from the low load operational state to the high load operational state at time t1 in FIG. 6A- 6E, as shown in FIG. 6A, the fuel injection amount is changed from a fuel injection amount Q1 corresponding to the low load operation to a fuel injection amount Q2 corresponding to the high load operation.

FIG. 6B shows a change in the bore wall temperature when the load is changed. As shown in FIG. 6B, the actual bore wall temperature cannot be sufficiently increased during a certain period after the load is changed (from time t1 to time t2), and the actual bore wall temperature reaches bore wall temperature at the time of steady operation performed at a high load at time t2. Namely, as shown in FIG. 6C, there is a difference in the increase in the bore wall temperature when the load is changed. The difference becomes the maximum value immediately after the engine load is changed, decreases with time, and finally becomes "0".

As shown by a chain line in FIG. 6D, if the pilot interval is changed to a value corresponding to the high load operation immediately after the engine load is changed, that is, if the pilot interval is changed to a value adjusted based on the temperature difference between the bore wall temperature and the coolant temperature at the time of steady operation performed at a high load, the combustion noise increases, as shown by a chain line in FIG. 6E.

The reason is as follows. When the engine is operated at a high load, the bore wall temperature becomes higher than that when the engine is operated at a low load. Therefore, the pilot interval is set to a larger value. Thus, the performance timing of the pilot injection is more apart from and the performance timing of the main injection. When the piston is apart from the upper dead point to some extent, that is, when the cylinder pressure is low and the temperature in the combustion chamber is not excessively high, the pilot injection is performed. Accordingly, when the engine is operated at a high load, setting the pilot interval to a larger value suppresses rapid combustion of the fuel injected by the pilot injection.

Meanwhile, the bore wall temperature in the certain period after the load is changed (from time t1 to time t2) is lower than the bore wall temperature at the time of steady operation performed at a high load. Accordingly, the ignition delay period of the fuel injected by the pilot injection is likely to be longer. If the pilot interval is made longer immediately after the load is changed although such a state occurs during the period from time t1 to time t2, the pilot injection is performed in the state where the temperature in the combustion chamber is not sufficiently increased. Therefore, the ignition delay period becomes further longer, and the combustion state deteriorates, which increases the combustion noise. Namely, the bore wall temperature, which is estimated in the case of the pilot interval corresponding to the operation at a high load, is different from the bore wall temperature at the time of transient delay which occurs after the engine load is changed, and deviation occurs in the pilot interval which should be set to a value corresponding to the bore wall temperature. Accordingly, the combustion state deteriorates.

In contrast to this, in the embodiment, as shown by a solid line in FIG. 6B, the pilot interval is set, which is corrected based on the difference, that is, based on the bore wall temperature while the transient delay occurs. Therefore, as shown by a solid line in FIG. 6E, the combustion noise can be suppressed.

Namely, immediately after the operational state is changed from the low load operational state to the high load operational state, since the value of the difference Thbd is low, the pilot interval is corrected so as to be shorter. Accordingly, the pilot injection is performed after the temperature in the combustion chamber is sufficiently increased. Also, even when the bore wall temperature is low, the ignition delay of the fuel injected by the pilot injection is suppressed. As the difference Thbd comes closer to "0" with time, the pilot interval is corrected so as to become gradually longer. Then, the pilot injection is performed at the optimum timing corresponding to the increase in the bore wall temperature. The transient correction process makes it possible to maintain the appropriate combustion state, and suppresses the combustion noise.

So far, the description has been made concerning the case where the operational state is changed from the low load operational state to the high load operational state, that is, the case where the bore wall temperature at the time of transition is lower than the bore wall temperature at the time of steady operation which is performed after the engine load is changed. Meanwhile, even when the bore wall temperature at the time of transition is higher than the bore wall temperature at the time of steady operation which is performed after the engine load is changed, for example, even when the operational state is changed from the high load operational state to the low load operational state, according to the embodiment, the fuel injection parameters are corrected based on the difference Thbd according to the maps shown in FIG. 5. Therefore, even when the transient delay occurs in the bore wall temperature while the engine load is changed, it is possible to maintain the appropriate combustion state and suppress the combustion noise, and the like.

According to the embodiment, the steady operation time temperature difference Thbdc, which is the temperature difference between the bore wall temperature and the coolant temperature at steady operation time, is obtained, and used as the index value of the bore wall temperature at steady operation time. Also, the transition operation time temperature difference Thbdt, which is the temperature difference between the bore wall temperature with transient delay taken into consideration and the coolant temperature, is estimated and used as the index value of the bore wall temperature with transient delay taken into consideration. Accordingly, it is possible to obtain each index value of the bore wall temperature with the coolant temperature taken into consideration, the coolant temperature affecting the combustion state, transition of the bore wall temperature, and the like. It is also possible to appropriately estimate the difference Thbd.

As described in detail so far, with the fuel injection control apparatus for a diesel engine according to the embodiment, the following excellent effects can be obtained.

(1) Even when the load of the diesel engine 1 is suddenly changed, the difference of the bore wall temperature due to the sudden change in the load is estimated, and the fuel injection parameter is corrected based on the estimated difference. Accordingly, even when the optimum value of the fuel injection parameter is adjusted in advance under the above-mentioned conditions, deviation in the parameter due to the transient delay of the bore wall temperature is corrected, and the combustion state is maintained appropriately.

(2) The index value of the bore wall temperature at steady operation time is obtained based on the relationship between the rotational speed NE of the diesel engine 1 and the fuel injection amount Q. Also, the index value of the bore wall temperature with transient delay of the bore wall temperature taken into consideration is estimated, using the time constant concerning the transient delay of the bore wall temperature, which is decided based on the relationship between the rotational speed NE of the diesel engine 1 and the fuel injection amount Q. Then, the difference of the bore wall temperature is calculated based on the temperature difference between the estimated index value of the bore wall temperature with transient delay taken into consideration and the index value of the bore wall temperature at steady operation time. It is therefore possible to accurately obtain the difference Thbd, which is caused due to the sudden change in the load of the diesel engine 1, based on the engine operational state at each time. Consequently, it is possible to correct the fuel injection parameter further accurately.

(3) The steady operation time temperature difference Thbdc is calculated as the index value of the bore wall temperature at steady operation time, and the transition operation time temperature difference Thbdt is estimated as the index value of the bore wall temperature with transient delay taken into consideration. It is therefore possible to obtain the index value of each bore wall temperature with the coolant temperature taken into consideration, the coolant temperature affecting the combustion state, transition of the bore wall temperature and the like. Consequently, it is possible to appropriately estimate the difference.

Also, the steady operation time temperature difference, and the time constant concerning the transient delay of the bore wall temperature are obtained according to the above-mentioned maps. Therefore, these values can be easily obtained.

Also, estimation of the transition operation time temperature difference is periodically performed based on the values read from the maps according to the equation (1). Therefore, the accuracy and reliability of the estimation are appropriately maintained.

(4) The map showing the fuel injection parameter whose optimum value is adjusted based on the temperature difference between the bore wall temperature and the coolant temperature is prepared. In this map, the fuel injection parameter is used as the base injection parameter related to the engine rotational speed NE and the fuel injection amount Q. Then, the corresponding base injection parameter is obtained according to the map, and the fuel injection parameter is corrected by adding the transition correction amount corresponding to the difference calculated based on the injection parameter to the obtained base injection parameter. It is therefore possible to easily obtain the fuel injection parameter whose optimum value is adjusted based on the temperature difference between the bore wall temperature and the coolant temperature, according to the engine rotational speed NE and the fuel injection amount Q at each time. It is also possible to easily make the above-mentioned correction to the obtained parameter.

(5) Each of the pilot interval at the time of pilot injection, the pilot injection amount at the time of pilot injection, and the fuel injection timing at the time of main injection is a parameter effective for preventing deterioration of the fuel state due to the transient delay of the bore wall temperature. According to the embodiment in which all of these parameters are targets of the correction based on the difference, the combustion state can be maintained further appropriately.

The fuel injection control apparatus for a diesel engine according to the invention is not limited to the fuel injection control apparatus according to the above-mentioned embodiment, and can be realized in, for example, the following modified embodiment.

In the above-mentioned embodiment, the difference of the bore wall temperature due to a sudden change in the load of the diesel engine is estimated by obtaining the temperature difference between the transition operation time temperature difference Thbdt and the steady operation time temperature difference Thbdc. However, another calculation method may be employed, as long as the difference can be estimated. For example, the bore wall temperature at steady operation time of the engine load may be estimated using the parameter (for example, the engine load) having a correlation with the bore wall temperature at steady operation time of the engine load.

Also, the bore wall temperature in the period in which the transient delay occurs may be estimated using the parameter (for example, the bore wall temperature at the time of steady operation performed before the engine load is changed and the elapsed time since the engine load is changed) having correlation with the bore wall temperature in the period in which the transient delay occurs. Then, the difference can be estimated by obtaining the temperature difference between the bore wall temperature at steady operation time of the engine load and the bore wall temperature in the period in which the transient delay occurs (namely, the bore wall temperature with transient delay taken into consideration). In this manner, the bore wall temperature at steady operation time and the bore wall temperature with transient delay taken into consideration may be directly obtained without obtaining the index value of the bore wall temperature at steady operation time (steady operation time temperature difference Thbdc) and the index value of the bore wall temperature with transient delay taken into consideration (transition operation time temperature difference Thbdt). In this case as well, it is possible to accurately obtain the difference Thbd, which is caused due to a sudden change in the engine load, based on the engine operational state at each time. It is therefore possible to correct the fuel injection parameter further accurately.

In the above-mentioned embodiment, the map is prepared which shows the various fuel injection parameters whose optimum values are adjusted based on the steady operation time temperature difference Thbdc, the time constant concerning the transient delay of the bore wall temperature, the various transition correction amounts obtained based on the difference Thbd, and the temperature difference between the bore wall temperature and the coolant temperature. However, the calculating method is not limited to the method using the map. For example, the values may be calculated using a function expression, and the method for calculating each value may be changed as required.

In the above-mentioned embodiment, the fuel injection timing at the time of main injection, the pilot interval at the time of pilot injection, and the pilot injection amount at the time of pilot injection are corrected based on the difference. However, the fuel injection parameters, which are the targets of the correction, are not limited to these. For example, the combustion state is changed by changing the fuel injection amount at the time of main injection, the fuel injection pressure of the injector, and the like. Therefore, by correcting these fuel injection parameters based on the difference, the effects similar to those in the above-mentioned embodiment can be obtained.

Also, at least on of the pilot interval at the time of pilot injection, the pilot injection amount at the time of pilot injection, the fuel injection timing at the time of main injection, the fuel injection amount at the time of main injection, and the fuel injection pressure of the injector may be corrected based on the difference. In order to reduce the diesel knocking (fuel noise) of the engine, it is preferable to correct two or more fuel injection parameters.

As mentioned above, the appropriate combustion state can be obtained by correcting the fuel injection timing at the time of main injection, the fuel injection amount at the time of main injection, and the fuel injection pressure of the injector based on the difference. Generally, the fuel injection amount at the time of main injection constitutes the major portion of the fuel injection amount Q which is obtained based on the engine load, and the like. Accordingly, even when the fuel injection control apparatus which does not perform the pilot injection is used, the effects similar to those in the above-mentioned embodiment can be obtained by correcting the parameters corresponding to these fuel injection parameters.

In the above-mentioned embodiment, the transition correction process is performed when the operational state is changed from the low load operational state to the high load operational state, and when the operational state is changed from the high load operational state to the low load operational state. However, the transition correction process may be performed only when the operational state is changed from the low load operational state to the high load operational state, or only when the operational state is changed from the high load operational state to the low load operational state. In order to reduce the combustion noise, it is preferable to perform the transition correction process when the operational state is changed from the low load operational state to the high load operational state and when the operational state is changed from the high load operational state to the low load operational state, that is, in the same method as that in the above-mentioned embodiment.

In the above-mentioned embodiment, the invention is applied to the so-called common rail type fuel injection control apparatus. However, the invention may be applied to another type of fuel injection control apparatus such as a distributor-type fuel injection apparatus and an in-line fuel injection control apparatus.

## Claims

1. A fuel injection control apparatus for a diesel engine, which controls a fuel injection mode based on a fuel injection parameter whose optimum value is adjusted based on a temperature difference between a bore wall temperature, which is a temperature of a cylinder bore wall on a combustion chamber side, and a coolant temperature, which is a temperature of a coolant that cools the cylinder bore wall, **characterized by** comprising:

   estimating means for estimating a difference (Thbd) between a difference between a bore wall temperature and a coolant temperature during a transition operation time and a difference between a bore wall temperature and a coolant temperature during a steady operation time, the difference (Thbd) being caused due to a sudden change in a load of the diesel engine (1); and
   correcting means for correcting the fuel injection parameter based on the estimated difference (Thbd).

2. The fuel injection control apparatus for a diesel engine according to claim 1, **characterized in that** the correcting means includes steady operation time bore wall temperature computing means for obtaining the bore wall temperature at steady operation time based on a relationship between a rotational speed (NE) of the diesel engine (1) and a fuel injection amount (Q); transition operation time bore wall temperature estimating means for estimating a bore wall temperature with transient delay of the bore wall temperature taken into consideration, by using a time constant concerning transient delay of the bore wall temperature that is decided based on the relationship between the rotational speed of the diesel engine and the fuel injection amount; and difference (Thbd) computing means for computing the difference (Thdb), wherein the fuel injection parameter is corrected using the computed difference (Thbd).

3. The fuel injection control apparatus for a diesel engine according to claim 2, **characterized in that** the steady operation time bore wall temperature computing means computes a steady operation time temperature difference (Thbdc), that is, a temperature difference between the bore wall temperature and the coolant temperature at steady operation time, as an index value of the bore wall temperature at steady operation time; the transition operation time bore wall temperature estimating means estimates a transition operation time temperature difference (Thbdt), that is, a temperature difference between the bore wall temperature with transient delay taken into consideration and the coolant temperature, as an index value of the bore wall temperature with transient delay taken into consideration; maps showing the steady operation time temperature difference (Thbdc) and the time constant ($\alpha$) concerning transient delay of the bore wall temperature, which is decided by the transition operation time bore wall temperature estimating means, are prepared based on the relationship between the rotational speed of the diesel engine and the fuel injection amount; and in a case where the transition operation time bore wall temperature estimating means periodically estimates the transition operation time temperature difference (Thbdt), when Thbdc indicates the steady operation time temperature difference obtained by the steady operation time bore wall temperature computing means each time estimation is performed, Thbdtn-1 indicates a previous estimate value of the transition operation time temperature difference, and Thbdtn indicates a present estimate value of the transition operation time temperature difference, the transition operation time bore wall temperature estimating means computes and estimates the present estimate value by performing an equation "Thbdtn = Thbdtn-1+(Thbdc-Thbdtn-1)/time constant" based on the time constant decided according to the map each time the estimation is performed.

4. The fuel injection control apparatus for a diesel engine according to claim 2 or 3, **characterized in that** the fuel injection parameter whose optimum value is adjusted based on the temperature difference between the bore wall temperature and the coolant temperature is shown in a map as a base injection parameter related to the rotational speed (NE) of the diesel engine (1) and the fuel injection amount; and the correcting means obtains a corresponding base parameter according to the map, and corrects the fuel injection parameter by adding a transition correction amount corresponding to the difference (Thbd), which is calculated based on the injection parameter, to the obtained base injection parameter.

5. The fuel injection control apparatus for a diesel engine according to any one of claims 1 to 4, **characterized in that** the fuel injection parameter to be corrected by the correcting means is at least one of a pilot interval at the time of pilot injection, a pilot injection amount at the time of pilot injection, fuel injection timing at the time of main injection, the fuel injection amount (Q) at the time of main injection, and a fuel injection pressure of the injector.

6. A fuel injection control method for a diesel engine, for controlling a fuel injection mode based on a fuel injection parameter whose optimum value is adjusted based on a temperature difference between a bore wall temperature, which is a temperature of a cylinder bore wall on a combustion chamber side, and a coolant temperature, which is a temperature of a coolant for cooling the cylinder bore wall, **characterized by** comprising the steps of:

estimating a difference (Thbd) between a difference between a bore wall temperature and a coolant temperature during a transition operation time and a difference between a bore wall temperature and a coolant temperature during a steady operation time, the difference (Thbd) being caused due to a sudden change in a load of the diesel engine (1); and
correcting the fuel injection parameter based on the estimated difference (Thbd).

**Patentansprüche**

1. Kraftstoff-Einspritzvorrichtung für einen Dieselmotor, die einen Kraftstoff-Einspritzmodus auf der Basis eines Kraftstoff-Einspritzparameters steuert, dessen optimaler Wert auf der Basis eines Temperaturunterschieds zwischen einer Bohrungswandtemperatur, bei der es sich um eine Temperatur einer Zylinderbohrungswand auf einer Brennkammerseite handelt, und einer Kühlmitteltemperatur, bei der es sich um eine Temperatur eines Kühlmittels handelt, das die Zylinderbohrungswand kühlt, angepasst wird, **dadurch gekennzeichnet, dass** sie Folgendes aufweist:

ein Schätzmittel zum Schätzen eines Unterschieds (Thbd) zwischen einem Unterschied zwischen einer Bohrungswandtemperatur und einer Kühlmitteltemperatur während einer Übergangsbetriebszeit und einem Unterschied zwischen einer Bohrungswandtemperatur und einer Kühlmitteltemperatur während einer Stetigbetriebszeit, wobei der Unterschied (Thbd) aufgrund einer plötzlichen Änderung einer Last des Dieselmotors (1) erzeugt wird; und
ein Korrekturmittel zum Korrigieren des Brennstoff-Einspritzparameters auf der Basis des geschätzten Unterschieds (Thbd).

2. Kraftstoff-Einspritzvorrichtung für einen Dieselmotor nach Anspruch 1, **dadurch gekennzeichnet, dass** das Korrekturmittel Folgendes aufweist: ein Mittel zum Berechnen einer Stetigbetriebszeit-Bohrungswandtemperatur, um die Bohrungswandtemperatur während einer Stetigbetriebszeit auf der Basis einer Beziehung zwischen einer Drehzahl (NE) des Dieselmotors (1) und einer Kraftstoff-Einspritzmenge (Q) zu ermitteln, ein Mittel zum Schätzen einer Übergangsbetriebszeit-Bohrungswandtemperatur, um eine Bohrungswandtemperatur unter Berücksichtigung einer Übergangsverzögerung der Bohrungswandtemperatur mittels einer Zeitkonstanten in Bezug auf die Übergangsverzögerung der Bohrungswandtemperatur, die auf der Basis der Beziehung zwischen der Drehzahl des Dieselmotors und der Kraftstoff-Einspritzmenge festgelegt wird, zu schätzen, und ein Mittel zum Berechnen des Unterschieds (Thbd), wobei der Kraftstoff-Einspritzparameter unter Verwendung des errechneten Unterschieds (Thbd) korrigiert wird.

3. Kraftstoff-Einspritzvorrichtung für einen Dieselmotor nach Anspruch 2, **dadurch gekennzeichnet, dass** das Mittel zum Berechnen einer Stetigbetriebszeit-Bohrungswandtemperatur einen Stetigbetriebszeit-Temperaturunterschied (Thbdc), d.h. einen Temperaturunterschied zwischen der Bohrungswandtemperatur und der Kühlmitteltemperatur während einer Stetigbetriebszeit, als einen Indexwert der Bohrungswandtemperatur während einer Stetigbetriebszeit berechnet; das Mittel zum Schätzen der Übergangsbetriebszeit-Bohrungswandtemperatur einen Übergangsbetriebszeit-Temperaturunterschied (Thbdt), d.h. einen Temperaturunterschied zwischen der Bohrungswandtemperatur unter Berücksichtigung einer Übergangsverzögerung und der Kühlmitteltemperatur, als einen Indexwert der Bohrungswandtemperatur unter Berücksichtigung einer Übergangsverzögerung schätzt; Kennfelder, die den Stetigbetriebszeit-Temperaturunterschied (Thbdc) und die Zeitkonstante ($\alpha$) in Bezug auf die Übergangsverzögerung der Bohrungswandtemperatur, die durch das Mittel zum Schätzen der Übergangsbetriebszeit-Bohrungswandtemperatur festgelegt wird, zeigen, auf der Basis der Beziehung zwischen der Drehzahl des Dieselmotors und der Kraftstoff-Einspritzmenge erstellt werden; und in einem Fall, wo das Mittel zum Schätzen der Übergangsbetriebszeit-Bohrungswandtemperatur den Übergangsbetriebszeit-Temperaturunterschied (Thbdt) periodisch schätzt, wenn Thbdc den Stetigbetriebszeit-Temperaturunterschied anzeigt, der durch das Mittel zum Berechnen der Stetigbetriebszeit-Bohrungswandtemperatur jedes Mal ermittelt wird, wenn eine Schätzung durchgeführt wird, Thbdtn-1 einen vorhergehenden Schätzwert des Übergangsbetriebszeit-Temperaturunterschieds anzeigt und Thbdtn einen aktuellen Schätzwert des Übergangsbetriebszeit-Temperaturunterschieds anzeigt, das Mittel zur Schätzung der Übergangsbetriebszeit-Bohrungswandtemperatur den aktuellen Schätzwert durch Ausführen einer Gleichung

$$\text{„Thbdtn = Thbdtn} - 1 + (\text{Thbdc} - \text{Thbdtn} - 1) / \text{Zeitkonstante“}$$

auf der Basis der Zeitkonstante, die jedes Mal wenn die Schätzung durchgeführt wird, entsprechend dem Kennfeld festgelegt wird, berechnet und schätzt.

4. Kraftstoff-Einspritzvorrichtung für einen Dieselmotor nach Anspruch 2 oder 3, **dadurch gekennzeichnet, dass** der Kraftstoff-Einspritzparameter, dessen optimaler Wert auf der Basis eines Temperaturunterschieds zwischen der Bohrungswandtemperatur und der Kühlmitteltemperatur angepasst wird, in einem Kennfeld als Basis-Einspritzparameter in Bezug auf die Drehzahl (NE) des Dieselmotors (1) und die Kraftstoff-Einspritzmenge gezeigt wird; und das Korrekturmittel einen entsprechenden Basisparameter entsprechend dem Kennfeld ermittelt und den Kraftstoff-Einspritzparameter durch Addieren eines Übergangskorrekturbetrags, der dem Unterschied (Thbd) entspricht und der auf der Basis des Einspritzparameters berechnet, wird, zum erhaltenen Basis-Einspritzparameter korrigiert.

5. Kraftstoff-Einspritzvorrichtung für einen Dieselmotor nach einem der Ansprüche 1 bis 4, **dadurch gekennzeichnet, dass** der Kraftstoff-Einspritzparameter, der durch das Korrekturmittel zu korrigieren ist, ein Vorintervall zur Zeit der Voreinspritzung und/oder eine Voreinspritzmenge zur Zeit der Voreinspritzung und/oder ein Kraftstoff-Einspritzzeitpunkt während der Haupteinspritzung und/oder die Kraftstoff-Einspritzmenge (Q) während der Haupteinspritzung und/oder ein Kraftstoff-Einspritzdruck der Einspritzeinrichtung ist.

6. Kraftstoff-Einspritzverfahren für einen Dieselmotor, zum Steuern eines Kraftstoff-Einspritzmodus auf der Basis eines Kraftstoff-Einspritzparameters, dessen optimaler Wert auf der Basis eines Temperaturunterschieds zwischen einer Bohrungswandtemperatur, bei der es sich um eine Temperatur einer Zylinderbohrungswand auf einer Brennkammerseite handelt, und einer Kühlmitteltemperatur, bei der es sich um eine Temperatur eines Kühlmittels handelt, das die Zylinderbohrungswand kühlt, angepasst wird, **dadurch gekennzeichnet, dass** es die folgenden Schritte umfasst:

Schätzen eines Unterschieds (Thbd) zwischen einem Unterschied zwischen einer Bohrungswandtemperatur und einer Kühlmitteltemperatur während einer Übergangsbetriebszeit und einem Unterschied zwischen einer Bohrungswandtemperatur und einer Kühlmitteltemperatur während einer Stetigbetriebszeit, wobei der Unterschied (Thbd) aufgrund einer plötzlichen Änderung einer Last des Dieselmotors (1) erzeugt wird; und Korrigieren des Brennstoff-Einspritzparameters auf der Basis des geschätzten Unterschieds (Thbd).

**Revendications**

1. Dispositif de commande d'injection de carburant pour un moteur diesel, qui commande un mode d'injection de carburant sur la base d'un paramètre d'injection de carburant dont la valeur optimale est ajustée sur la base d'une différence de température entre une température de paroi d'alésage, qui est une température d'une paroi d'alésage de cylindre d'un côté de chambre de combustion, et une température de liquide de refroidissement, qui est une température d'un liquide de refroidissement qui refroidit la paroi d'alésage de cylindre, **caractérisé en ce qu'**il comprend :

   des moyens d'estimation pour estimer une différence (Thbd) entre une différence entre une température de paroi d'alésage et une température de liquide de refroidissement pendant un temps de fonctionnement de transition et une différence entre une température de paroi d'alésage et une température de liquide de refroidissement pendant un temps de fonctionnement en régime permanent, la différence (Thbd) étant due à une variation soudaine d'une charge du moteur diesel (1) ; et
   des moyens de correction pour corriger le paramètre d'injection de carburant sur la base de la différence (Thbd) estimée.

2. Dispositif de commande d'injection de carburant pour un moteur diesel selon la revendication 1, **caractérisé en ce que** les moyens de correction comprennent des moyens de calcul de température de paroi d'alésage de temps de fonctionnement en régime permanent pour obtenir la température de paroi d'alésage à un instant de fonctionnement en régime permanent sur la base d'une relation entre une vitesse de rotation (NE) du moteur diesel (1) et une quantité d'injection de carburant (Q) ; des moyens d'estimation de température de paroi d'alésage de temps de fonctionnement de transition pour estimer une température de paroi d'alésage en prenant en considération un retard transitoire de la température de paroi d'alésage, en utilisant une constante de temps concernant le retard transitoire de la température de paroi d'alésage qui est décidée sur la base de la relation entre la vitesse de rotation du moteur diesel et la quantité d'injection de carburant ; et des moyens de calcul de différence (Thbd) pour calculer la différence (Thbd), dans lequel le paramètre d'injection de carburant est corrigé en utilisant la différence (Thbd) calculée.

3. Dispositif de commande d'injection de carburant pour un moteur diesel selon la revendication 2, **caractérisé en ce que** les moyens de calcul de température de paroi d'alésage de temps de fonctionnement en régime permanent calculent une différence de température de temps de fonctionnement en régime permanent (Thbdc), c'est-à-dire, une différence de température entre la température de paroi d'alésage et la température de liquide de refroidissement à un instant de fonctionnement en régime permanent, en tant que valeur d'index de la température de paroi d'alésage à un instant de fonctionnement en régime permanent ; les moyens d'estimation de température de paroi d'alésage de temps de fonctionnement de transition estiment une différence de température de temps de fonctionnement de transition (Thbdt), c'est-à-dire, une différence de température entre la température de paroi d'alésage prenant en considération un retard transitoire et la température de liquide de refroidissement, en tant que valeur d'index de la température de paroi d'alésage prenant en considération un retard transitoire ; des cartes montrant la différence de température de temps de fonctionnement en régime permanent (Thbdc) et la constante de temps ($\alpha$) concernant un retard transitoire de la température de paroi d'alésage, qui est décidée par les moyens d'estimation de température de paroi d'alésage de temps de fonctionnement de transition, sont préparées sur la base de la relation entre la vitesse de rotation du moteur diesel et la quantité d'injection de carburant ; et dans un cas où les moyens d'estimation de température de paroi d'alésage de temps de fonctionnement de transition estiment périodiquement la différence de température de temps de fonctionnement de transition (Thbdt), lorsque Thbdc indique la différence de température de temps de fonctionnement en régime permanent obtenue par les moyens de calcul de température de paroi d'alésage de temps de fonctionnement en régime permanent à chaque fois qu'une estimation est effectuée, Thbdtn-1 indique une valeur d'estimation précédente de la différence de température de temps de fonctionnement de transition, et Thbdtn indique une valeur d'estimation actuelle de la différence de température de temps de fonctionnement de transition, les moyens d'estimation de température de paroi d'alésage de temps de fonctionnement de transition calculent et estiment la valeur d'estimation actuelle en effectuant une équation « Thbdtn = Thbdtn-1 + (Thbdc - Thbdtn-1)/constante de temps » sur la base de la constante de temps décidée conformément à la carte à chaque fois que l'estimation est effectuée.

4. Dispositif de commande d'injection de carburant pour un moteur diesel selon la revendication 2 ou 3, **caractérisé en ce que** le paramètre d'injection de carburant dont la valeur optimale est ajustée sur la base de la différence de température entre la température de paroi d'alésage et la température de liquide de refroidissement est montré dans une carte en tant que paramètre d'injection de base lié à la vitesse de rotation (NE) du moteur diesel (1) et à la quantité d'injection de carburant ; et les moyens de correction obtiennent un paramètre de base correspondant conformément à la carte, et corrigent le paramètre d'injection de carburant en ajoutant une quantité de correction de transition correspondant à la différence (Thbd), qui est calculée sur la base du paramètre d'injection, au paramètre d'injection de base obtenu.

5. Dispositif de commande d'injection de carburant pour un moteur diesel selon l'une quelconque des revendications 1 à 4, **caractérisé en ce que** le paramètre d'injection de carburant devant être corrigé par les moyens de correction est au moins l'un d'un intervalle pilote à l'instant d'une injection pilote, d'une quantité d'injection pilote à l'instant d'une injection pilote, d'une synchronisation d'injection de carburant à l'instant d'une injection principale, de la quantité d'injection de carburant (Q) à l'instant d'une injection principale, et d'une pression d'injection de carburant de l'injecteur.

6. Procédé de commande d'injection de carburant pour un moteur diesel, pour commander un mode d'injection de carburant sur la base d'un paramètre d'injection de carburant dont la valeur optimale est ajustée sur la base d'une différence de température entre une température de paroi d'alésage, qui est une température d'une paroi d'alésage de cylindre d'un côté de chambre de combustion, et une température de liquide de refroidissement, qui est une température d'un liquide de refroidissement pour refroidir la paroi d'alésage de cylindre, **caractérisé en ce qu'**il comprend les étapes consistant à :

estimer une différence (Thbd) entre une différence entre une température de paroi d'alésage et une température de liquide de refroidissement pendant un temps de fonctionnement de transition et une différence entre une température de paroi d'alésage et une température de liquide de refroidissement pendant un temps de fonctionnement en régime permanent, la différence (Thbd) étant due à une variation soudaine d'une charge du moteur diesel (1) ; et
corriger le paramètre d'injection de carburant sur la base de la différence (Thbd) estimée.

# FIG.1

# F I G . 2

START

S101

OBTAIN TEMPERATURE DIFFERENCE Thbdc BETWEEN
BORE WALL TEMPERATURE AND COOLANT
TEMPERATURE AT STEADY OPERATION TIME
$Thbdc \leftarrow f(NE, Q)$

S102

CALCULATE TEMPERATURE DIFFERENCE Thbdc BETWEEN
BORE WALL TEMPERATURE WITH TRANSIENT DELAY TAKEN
INTO CONSIDERATION AND COOLANT TEMPERATURE
$Thbdt_n \leftarrow Thbdt_{n-1} + (Thbdc - Thbdt_{n-1})/TIME\ CONSTANT$

S103

CALCULATE DIFFERENCE Thbd
$Thbd \leftarrow Thbdt - Thbdc$

S104

CALCULATE EACH TRANSITION CORRECTION
AMOUNT BASED ON DIFFERENCE Thbd
$EACH\ TRANSITION\ CORRECTION\ AMOUNT \leftarrow f(Thbd)$

S105

CALCULATE EACH BASE INJECTION PARAMETER
$EACH\ BASE\ INJECTION\ PARAMETER \leftarrow f(NE, Q)$

S106

CORRECT VARIOUS FUEL INJECTION PARAMETERS
$EACH\ OF\ VARIOUS\ FUEL\ INJECTION\ PARAMETERS \leftarrow$
$EACH\ BASE\ INJECTION\ PARAMETER + EACH$
$TRANSITION\ CORRECTION\ AMOUNT$

END

# F I G . 3

S101:CALCULATION OF TEMPERATURE DIFFERENCE BETWEEN BORE WALL
TEMPERATURE AND COOLANT TEMPERATURE AT STEADY OPERATION TIME

Thbdc : MAP SHOWING TEMPERATURE DIFFERENCE
BETWEEN BORE WALL  TEMPERATURE AND COOLANT
TEMPERATURE AT STEADY OPERATION  TIME [°C]

ENGINE ROTATIONAL SPEED NE

EP 1 564 395 B1

# FIG. 4

S102: CLACULATION OF TIME CONSTANT OF
TRANSIENT DELAY OF BORE WALL TEMPERATURE

MAP SHOWING TIME CONSTANT OF TRANSIENT
DELAY OF BORE WALL TEMPERATURE

SMALL

LARGE

SMALL ← → LARGE

LOW

HIGH

LOW ← → HIGH
ENGINE ROTATIONAL SPEED NE

LARGE ← → SMALL
FUEL INJECTION AMOUNT Q

# F I G . 5

SI04:CALCULATION OF EACH INJECTION
PARAMETER CORRECTION AMOUNT

| DIFFERENCE Thbd | LOW | HIGH |
|---|---|---|
| MAIN INJECTION TIMINING CORRECTION AMOUNT | ADVANCED | RETARDED |

| DIFFERENCE Thbd | LOW | HIGH |
|---|---|---|
| PILOT INTERVAL CORRECTION AMOUNT | SHORT | LONG |

| DIFFERENCE Thbd | LOW | HIGH |
|---|---|---|
| PILOT INJECTION CORRECTION AMOUNT | INCREASED | DECREASED |

21

F I G . 6A
FUEL INJECTION AMOUNT

F I G . 6B
BORE WALL TEMPERATURE [°C]

F I G . 6C
DIFFERENCE Thbd

F I G . 6D
PILOT INTERVAL

F I G . 6E
COMBUSTION NOISE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001115885 A